# EUROPEAN PATENT SPECIFICATION

(11) **EP 1 974 136 B1**
(45) Date of publication and mention of the grant of the patent: **07.04.2010**
(21) Application number: 07704945.0
(22) Date of filing: 19.01.2007
(51) Int. Cl.: F02B 33/32, F02B 37/16, F02B 37/18, F02B 37/22, F02M 25/07, F02B 33/44, F02B 37/04

(54) **SUPERCHARGED DIESEL ENGINES**
AUFGELADENE DIESELMOTOREN
MOTEURS DIESELS SURALIMENTES

(30) Priority: 23.01.2006 GB 0601315
(43) Date of publication of application: 01.10.2008
(73) Proprietor: RICARDO UK LIMITED, Shoreham-by-Sea, West Sussex BN43 5FG (GB)
(72) Inventor: COOPER, Brian, Gorman, East Sussex BN3 4LN (GB); CORNWELL, Richard, Charles, Elliot, West Sussex BN5 9RS (GB)
(74) Representative: Jennings, Nigel Robin
(86) International application number: PCT/GB2007/000165
(87) International publication number: WO 2007/083131

(56) References cited:
- WO-A-99/54607
- US-A- 5 142 866

## Description

The present invention relates to supercharged diesel engines.

It is well known to increase the power output of a diesel engine by providing it with a turbocharger including a turbine situated in the exhaust duct and connected to a compressor wheel or impeller situated in the inlet duct. Rotation of the turbine by the exhaust gas rotates the compressor wheel which boosts the engine inlet pressure and thus results in a greater amount of air being induced into the engine. It is also well known to provide such engines with a supercharger, namely a pump of any of a variety of types driven by an electric motor or driven mechanically from the crank shaft of the engine, for the purpose of boosting the inlet duct pressure.

The disadvantages of both these devices are also well known. Thus the speed of a turbocharger turbine is related to the cube of the speed of the exhaust gases and this means in practice that a turbocharger is not capable of producing any very significant boost pressure at low engine speeds. Furthermore, turbochargers suffer from so called "turbo lag", which means that after the accelerator pedal of an automotive engine has been depressed, there is a delay of several seconds before the engine speed picks up sufficiently for the turbocharger to begin to produce a significant boost pressure. The mechanical input power provided to the compressor wheel of a turbocharger is effectively "free" in that it is extracted from the high speed exhaust gases. However, if it should be attempted to drive the turbocharger faster (to produce greater levels of boost) than a speed predetermined by the speed of the exhaust gases, for example by closing the wastegate or variable turbine vanes, the back pressure in the exhaust duct rises unacceptably and this decreases the efficiency of the engine by increasing its fuel consumption. The power input to a supercharger, on the other hand, is derived directly or indirectly from the crank shaft or electrically via an alternator and thus represents a significant power drain on the engine. Furthermore, large capacity superchargers can be extremely expensive.

Engines are known, see WO99/54607 A1 and US 5,142,866 A, with two turbochargers in series, one being substantially larger than the other. The smaller turbocharger is able to produce significant boost pressure at relatively low engine speeds but would be choked by high flow rates of exhaust gas at higher engine speeds and would cause an obstruction to the engine exhaust. The smaller turbocharger is therefore provided with a bypass passage whereby turbocharging is effected by the smaller turbocharger at lower engine speeds and the larger turbocharger at higher engine speeds. However, such twin charging systems suffer from a number of disadvantages not least due to the fact that the available boost pressure is still inherently related to the pressure in the exhaust duct.

It is therefore an object of the present invention to provide a diesel engine of twin charged type, that is to say with two charging devices, which combines the known advantages of both turbochargers and superchargers but does not suffer from their disadvantages.

It is well known in both diesel and gasoline engines to re-circulate a quantity of exhaust gas back from the exhaust duct to the inlet duct under certain engine conditions because it is found that mixing this re-circulated exhaust gas with incoming air reduces the amount of available oxygen for combustion and thus lowers the peak temperature of the combustion. This therefore limits the generation of nitrogen oxides. Exhaust gas is typically re-circulated via an exhaust gas re-circulation (EGR) duct extending between the exhaust duct and the inlet duct. The EGR duct is typically controlled by an EGR valve to regulate the gas flow. However, one of the most important factors determining the rate of flow of exhaust gas through the EGR duct is the pressure differential between its ends and it is not generally possible to control this, without affecting other controlled parameters of the engine e.g. boost pressure or fuel consumption. The flow of re-circulated exhaust gas is therefore sometimes constrained by the need to simultaneously optimise boost performance whilst maintaining minimal fuel consumption. With truck engines, there is frequently a requirement to recirculate exhaust gas at full engine load and under these conditions, when the supercharger and/or turbocharger are likely to be producing their maximum boost pressure, the pressure differential between the upstream and downstream ends of the EGR duct may be insufficient to permit sufficient or indeed any, exhaust gas to be recirculated. It is, therefore, a further object of the present invention to provide a diesel engine with means which permit the ready adjustment of the rate of flow of exhaust gas through a EGR duct, with a degree of independence from boost system performance and, in particular, will permit the desired volume of exhaust gas to be recirculated under all engine operating conditions.

According to the present invention a diesel engine comprises one or more cylinders, an inlet duct, an exhaust duct, a first pressure boosting device of variable output type situated in the inlet duct, a second pressure boosting device of variable output type situated in the inlet duct downstream of the first pressure boosting device, a selectively operable bypass duct connected to the inlet duct at positions upstream and downstream of the second pressure boosting device, a selectively variable throttle valve situated in the inlet duct at a position between the second pressure boosting device and the upstream connection of the bypass duct with the inlet duct and an exhaust gas recirculation (EGR) duct connected to the exhaust duct and to the inlet duct at a position between the throttle valve and the second pressure boosting device.

The first and second pressure boosting devices may be superchargers or turbochargers but it is preferred that at least one device is a turbocharger because this will enable the "free" energy available in the exhaust gases to be utilised. Numerous different types of supercharger are known and these will therefore not be described.

In practice, the two pressure boosting devices will be connected to a controller which may be programmed to vary the output of the two devices in order to achieve the inlet pressure to the cylinders and the pressure at the downstream end of the EGR duct which is appropriate for the instantaneous operating conditions of the engine so that the desired volume of air is admitted into the cylinders and the desired volume of exhaust gas is admitted into the inlet duct. It is preferred that the capacity of the first pressure boosting device is substantially greater than that of the second device and this will mean in practice that at low engine speeds substantially all of the pressure boosting will be performed by the second pressure boosting device. However, as the engine speed increases the boosting will increasingly be effected by the first pressure boosting device. The high rate of gas flow through the inlet duct at high engine speed would mean that the relatively small second pressure boosting device would constitute an unacceptable flow restriction and thus pressure loss and the bypass passage around the second device is, therefore, progressively opened in order to avoid this potential source of inefficiency. When a truck engine or other heavy duty engine is operating at high engine load it is frequently desired to recirculate relatively large flow rates of exhaust gas but at these speeds the pressure at the downstream end of the EGR duct would tend to be relatively high, thereby resulting in an insufficient flow rate of exhaust gas being recycled. However, the provision of the throttle valve in the inlet duct and the connection of the downstream end of the EGR duct to the inlet duct at a position between the throttle valve and the second pressure boosting device enables the controller to be programmed to close the throttle valve completely at high engine speeds and to operate the second pressure boosting device which will then operate in the manner of an EGR pump and suck exhaust gas through the EGR duct and discharge it into the inlet duct. The arrangement of the present invention will therefore permit the correct flow rate of exhaust gas to be recirculated under all engine operating conditions.

A particularly preferred embodiment of the invention further includes a first sensor arranged to produce a signal indicative of the speed of the engine, a second sensor arranged to produce a signal indicative of the load to which the engine is subjected and a third sensor arranged to produce a signal indicative of the pressure in the inlet duct downstream of the second pressure boosting device, the sensors being connected to a controller which is also connected to the first and second pressure boosting devices and is arranged to vary their output independently, the throttle valve also being connected to the controller, the controller being programmed to determine the desired value of the pressure in the inlet duct downstream of the second pressure boosting device and to compare this with the actual value of the pressure and, in the event of there being a difference, to adjust the output of the first and/or second pressure boosting device until there is substantially no difference, the controller being further programmed, if a higher pressure is required in the inlet duct, to preferentially increase the output of the first pressure boosting device, subject to the pressure in the exhaust duct not exceeding a predetermined value and, if a lower pressure is required in the inlet duct, preferentially to decrease the output of the second pressure boosting device. In this embodiment, the engine includes, as is usual, first and second sensors arranged to produce signals indicative of the speed of the engine and of engine load, respectively. It also includes a third sensor arranged to produce a signal indicative of the pressure in the inlet duct downstream of the second pressure boosting device. These sensors are connected to an electronic controller, which in practice constitutes at least a proportion of the engine management system with which most automotive engines are now provided. This controller is also connected to the first and second pressure boosting devices and can vary their output independently. The value of the desired boost pressure in the inlet duct is determined by the controller taking account of, amongst other things, engine speed and engine load. This desired boost pressure is compared with the actual value of the pressure in the inlet duct and if there is a difference the speed of the first and/or second pressure boosting device is altered to eliminate that difference. Since the first pressure boosting device is preferably a turbocharger and the power input to this turbocharger is effectively "free" (i.e. using energy which would otherwise be wasted), the controller is programmed to preferentially increase the output of the turbocharger in the event that a higher boost pressure is required. However, if the engine speed is very low, the turbocharger may be incapable of producing the boost pressure that is desired in an acceptable period of time and the controller then increases the speed of the second and preferably smaller pressure boosting device. Since the engine will become inefficient, that is to say consume a greater amount of fuel, if the back pressure in the exhaust duct rises above a predetermined level, the controller is also programmed to ensure that the turbocharger is operated such that the pressure in the exhaust duct does not rise above a predetermined value. Once the pressure in the exhaust duct has reached the predetermined value, the controller will not permit any further increase in the speed of the turbocharger and thus if an increased boost pressure is required, the controller is programmed to achieve this by increasing the speed of the second boosting device. Similarly, if the controller determines that the boost pressure should be reduced, it is programmed to preferentially decrease the output of the second device so as to reduce the mechanical drain on the engine. However, at higher engine speeds, the second device may not be operating at all and in this event, the controller will of course decrease the speed of the turbocharger, e.g. by opening the wastegate and/or by adjusting the angle of the vanes of the turbine.

In this preferred embodiment it is therefore essential that the controller measures or has an estimate of the exhaust pressure in the exhaust duct at all times. This can be achieved by mapping the exhaust duct pressure at all possible ranges of operating parameters and storing this map in the controller. The controller will know the speed and load of the engine and the boost pressure and the demanded duty cycle of the two boosting devices and these values will uniquely define the exhaust duct pressure. Alternatively, the engine may include a fourth sensor arranged to produce a signal indicative of the pressure in the exhaust duct upstream of the turbine. The controller will then compare the actual value of the exhaust duct pressure with the predetermined maximum pressure and make adjustments to the speed of the first and/or second pressure boosting device on the basis of this comparison. In another embodiment the controller could include a model of the charging system, with the model being corrected by one or more sensors located within the charging system.

It is preferred that the engine includes sensor means connected to the controller and arranged to produce a signal indicative of the rate of flow of exhaust gas through the EGR duct, the controller being programmed to produce a signal indicative of the desired rate of flow of exhaust gas and to compare the two signals and, in the event of there being a difference, to adjust the output of the first and/or second boosting device and/or the position of the EGR valve and/or throttle valve until there is substantially no difference. The sensor means may constitute a flow rate sensor in the EGR duct. Alternatively, it may comprise pressure sensors at the upstream and downstream ends of the EGR duct. These sensors can be used to derive the pressure drop along the duct which is inherently related to the rate of gas flow through it. Alternatively, as is well known in the field of diesel engines, the sensor means may constitute a flow rate sensor at the upstream end of the inlet duct which will provide a signal measurement of the flow rate of air into the inlet duct. If a map is produced showing the rate of air consumption by the engine at all possible combinations of operating conditions and this map is stored in the controller, the controller can produce a signal indicative of the actual air consumption rate at any time. The difference between the actual consumption rate by the engine and the rate of flow of air into the inlet duct is accounted for by the flow of exhaust gas into the inlet duct and thus a signal indicative of the rate of air flow into the inlet duct can be used to derive a signal indicative of the actual flow rate of recirculated exhaust gas in the usual way.

Thus as discussed above, one of the primary factors affecting the rate of flow of exhaust gas through the EGR duct is the pressure differential between its ends. The flow rate may be altered by altering this pressure differential and it will be appreciated that increasing the output of the turbocharger will increase the pressure in the exhaust duct, that is to say that the pressure at the inlet end of the EGR duct, and that the pressure at the downstream end of the EGR duct may be decreased by increasing the output speed of the second boosting device. Accordingly, the rate of supply of re-circulated exhaust gas to the engine may be controlled very precisely by controlling the outputs of the two boosting devices and this control does not interfere with that referred to above relating to controlling the boost pressure of the engine. However, as the engine speed and/or load increases it would in any event be usual to bypass the second boosting device and once the air side bypass valve is opened there would usually be no purpose in operating or varying the speed of the second boosting device. However, connection of the EGR duct to the inlet of the second boosting device means that the second boosting device may be operated, when the air side bypass valve is open and the throttle valve is closed, to act as a pump positively drawing exhaust gas through the EGR duct and into the inlet duct.

Further features and details of the invention will be apparent from the following description of two specific embodiments which is given by way of example only with reference to the accompanying highly schematic drawings, in which:

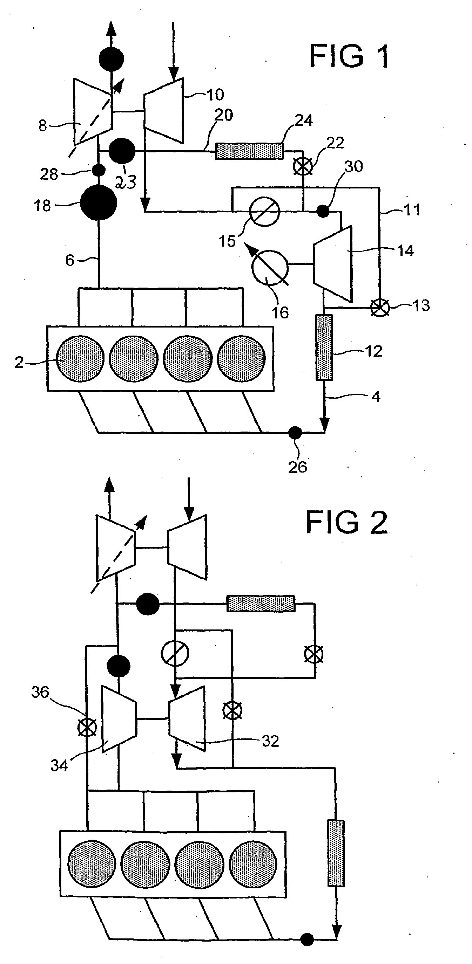

Figures 1 and 2 are views of first and second embodiments, respectively, of twin-charged diesel engines in accordance with the invention.

Referring firstly to Figure 1, the engine comprises one or more cylinders 2, in this case four cylinders, an inlet duct 4 and an exhaust duct 6. The engine includes a turbocharger of relatively large capacity comprising a turbine wheel 8 situated in the exhaust duct and a compressor wheel 10 coupled to it and situated in the inlet duct. The turbocharger is of adjustable throughput type and for this purpose the blades of the turbine nozzle are of adjustable pitch or alternatively a wastegate may be provided constituting a controllable bypass path around the turbine wheel. The engine further includes a supercharger 14 of relatively small capacity situated in the inlet duct 4 between the compressor wheel 10 and the cylinder(s) 2. The supercharger may be electrically driven but it is preferred that it is mechanically driven, e.g. by a belt drive coupled to the engine crankshaft. The supercharger is also of variable throughput type and for this purpose includes a speed controller 16. Situated between the supercharger 14 and the cylinder duct 2 is a charge air cooler 12 whose construction and purpose are well known per se.

Situated in the exhaust duct 6 upstream of the turbine wheel 8 is an exhaust purification device 18 of any appropriate type whose purpose is to remove unwanted emissions (e.g. particulates and hydrocarbons) from the engine exhaust gas. Extending between the exhaust duct 6, at a position between the filter 18 and the turbine wheel 8, and the inlet duct 4, at a position between the compressor wheel 10 and the supercharger 14, is an EGR duct 20, whose purpose is to permit exhaust gas to be recycled and to be admitted into the cylinders mixed with the inlet air. The EGR duct 20 includes a controllable valve 22 and an EGR gas cooler 24 (optionally with a cooler bypass valve), whose construction and purpose are also well known. The duct 20 may also include an exhaust purification device 23 in addition or as an alternative to the device 18.

Connected to the inlet duct 4 at positions upstream and downstream of the supercharger 14 is a bypass passage 11, which is selectively controllable by means of a valve 13. Also provided in the inlet duct at a position downstream of the upstream end of the bypass passage is a controllable throttle valve 15. The downstream end of the EGR duct 20 is connected to the inlet duct at a position between the throttle valve 15 and the supercharger 14.

Communicating with the inlet duct 4 at a position downstream of the supercharger 14 is a pressure sensor, indicated schematically at 26. Communicating with the exhaust duct 6 at a position upstream of the turbine 8 is a further pressure sensor, indicated schematically at 28. Situated in the inlet duct 4 adjacent the downstream end of the EGR duct is yet a further pressure sensor, indicated schematically at 30. All of these pressure sensors are connected to a controller (not shown), which in practice is likely to be part of the engine management system with which most automotive engines are now equipped. Also connected to the controller is the output controller of the turbocharger, namely the wastegate and/or the pitch control for the vanes, and the output controller 16 of the supercharger 14. The engine also includes a load sensor and a speed sensor which are also connected to the controller and are arranged to produce signals indicative of the load and speed of the engine.

In use, the controller calculates from the engine load and speed signals what boost pressure, ie. inlet duct pressure, is desirable and compares this with the actual boost pressure, as indicated by the sensor 26. If a boost pressure different to that currently prevailing is required, the controller adjusts the output of the turbocharger and/or supercharger appropriately. If the engine speed/load is low and it is desired to increase the boost pressure, the turbocharger is inherently not capable of making any significant contribution to the boost pressure and the controller operates to increase the speed of the supercharger. If the engine speed/load is relatively high, the controller operates to increase the speed of the turbocharger. However, in order to avoid the exhaust back pressure reaching an excessive level, that is to say a level at which the efficiency of the engine is significantly impaired, the exhaust duct pressure is monitored and compared with a predetermined maximum desired level, and if the exhaust pressure should reach this level and the boost pressure has not reached the desired value, the output of the supercharger is increased and no further increase in the output of the turbocharger is made.

If generally under light engine load conditions, it is desired to recirculate exhaust gas into the cylinders, the control system calculates, from a variety of signals including those indicative of the speed and load of the engine, the desired rate of flow of exhaust gas through the EGR duct 20. The engine also includes sensor means indicative of the actual rate of flow of exhaust gas through the duct 20. The sensor means may constitute a flow sensor of known type in the fresh air intake to the turbocharger compressor or in the EGR duct but in this case, the sensor means is constituted by the sensors 28 and 30 because the pressure differential across the ends of the duct 20 can be used to deliver a signal indicative of the flow rate through it. If there is any significant difference between the desired and actual values, the controller alters the speed of the turbocharger and/or supercharger to adjust the pressure differential across the EGR duct to a value which is consistent with the actual flow rate being equal to the desired value.

When the engine is running at low speed substantially all of the pressure boosting is effected by the supercharger 14. As the speed increases, the boosting is increasingly effected by the larger turbocharger. As the output from the supercharger drops to zero, the throttle valve is progressively closed, or alternatively it is closed incrementally when the supercharger output drops to zero, to remove the air path restriction that would otherwise be caused by the inoperative supercharger. Once the throttle valve 15 is closed, the supercharger can of course not contribute to pressurising the inflowing air. If it should be desired to recirculate a large flow rate of exhaust gas into the cylinders whilst the engine is running at high speed, the pressure at the downstream end of the EGR duct may be at such a high value that an insufficient flow rate of exhaust gas would flow through it. This is remedied by operating the supercharger to increase the pressure differential across the EGR duct, thereby increasing the flow rate of exhaust gas through it. The supercharger will therefore contribute to the gas flow into the cylinders, though only exhaust gas and no fresh air will flow through it.

The embodiment of Figure 2 is substantially the same as that of Figure 1, the only difference being that the supercharger 14 is replaced by a second turbocharger comprising a second compressor wheel 32 coupled to a second turbine 34, which is of variable output by virtue of the provision of a wastegate 36. The operation of this embodiment is the same as that of the first embodiment and will therefore not be described.

## Claims

1. A diesel engine comprising one or more cylinders (2), an inlet duct (4), an exhaust duct (6), a first pressure boosting device (8, 10) of variable output type situated in the inlet duct (4), a second pressure boosting device (16, 14 ; 34, 32) of variable output type situated in the inlet duct (4) downstream of the first pressure boosting device, a selectively operable bypass duct (11) connected to the inlet duct (4) at positions upstream and downstream of the second pressure boosting device, a selectively variable throttle valve (15) situated in the inlet duct (4) at a position between the second pressure boosting device (16, 14 ; 34, 32) and the upstream connection of the bypass duct (11) with the inlet duct (4) **characterized in that** the exhaust gas recirculation (EGR) duct (20) connected to the exhaust duct (6) and to the inlet duct (4) at a position between the throttle valve (15) and the second pressure boosting device (16, 14 ; 34, 32).

2. An engine as claimed in Claim 1 in which the first and second pressure boosting devices constitute turbochargers comprising a respective compressor (10, 32) wheel situated in the inlet duct (4) and coupled to a respective turbine (8, 34) situated in the exhaust duct (6).

3. An engine as claimed in Claim 1 in which the first pressure boosting device constitutes a turbocharger including a compressor wheel (10) situated in the inlet duct (4) and coupled to a turbine (8) situated in the exhaust duct (6) and the second pressure boosting device constitutes a supercharger (14), which is situated in the inlet duct (4) and is electrically driven or mechanically driven by the engine.

4. An engine as claimed in any one of Claims 1 to 3 further including a first sensor arranged to produce a signal indicative of the speed of the engine, a second sensor arranged to produce a signal indicative of the load to which the engine is subjected and a third sensor (26) arranged to produce a signal indicative of the pressure in the inlet duct downstream of the second pressure boosting device, the sensors being connected to a controller which is also connected to the first and second pressure boosting devices and is arranged to vary their output independently, the throttle valve (15) also being connected to the controller, the controller being programmed to determine the desired value of the pressure in the inlet duct (4) downstream of the second pressure boosting device and to compare this with the actual value of the pressure and, in the vent of there being a difference, to adjust the output of the first and/or second pressure boosting device until there is substantially no difference, the controller being further programmed, if a higher pressure is required in the inlet duct, to preferentially increase output of the first pressure boosting device, subject to the pressure in the exhaust duct (6) not exceeding a predetermined value and, if a lower pressure is required in the inlet duct (4), preferentially to decrease the output of the second pressure boosting device.

5. An engine as claimed in Claim 4 including sensor means connected to the controller and arranged to produce a signal indicative of the rate of flow of exhaust gas through the EGR duct (20) and an EGR valve (22) in the EGR duct (20), the controller being programmed to produce a signal indicative of the desired rate of flow of exhaust gas and to compare the two signals and, in the event of there being a difference, to adjust the output of the first and/or second boosting device and/or the position of the EGR valve (22) and/or throttle valve (15) until there is substantially no difference.

6. An engine as claimed in any one of the preceding claims including an exhaust purifying device (18, 23) in the exhaust gas flow path between the cylinders (2) and the inlet duct (4).

## Patentansprüche

1. Dieselmotor, umfassend einen oder mehrere Zylinder (2); einen Einlasskanal (4); einen Abgaskanal (6); eine erste Druckerhöhungsvorrichtung (8, 10) von variabler Abgabeart, die sich im Einlasskanal (4) befindet; eine zweite Druckerhöhungsvorrichtung (16, 14; 34, 32) von variabler Abgabeart, die sich im Einlasskanal (4) stromabwärts von der ersten Druckerhöhungsvorrichtung befindet; einen selektiv betreibbaren Bypasskanal (11), der mit dem Einlasskanal (4) an Positionen stromaufwärts und stromabwärts von der zweiten Druckerhöhungsvorrichtung verbunden ist; ein selektiv variables Drosselventil (15), das sich im Einlasskanal (4) an einer Position zwischen der zweiten Druckerhöhungsvorrichtung (16, 14; 34, 32) und der stromaufwärtigen Verbindung des Bypasskanals (11) mit dem Einlasskanal (4) befindet; **dadurch gekennzeichnet, dass** der Abgasrückführkanal (AGR-Kanal) (20) mit dem Abgaskanal (6) und dem Einlasskanal (4) an einer Position zwischen dem Drosselventil (15) und der zweiten Druckerhöhungsvorrichtung (16, 14; 34, 32) verbunden ist.

2. Motor nach Anspruch 1, bei dem die erste und die zweite Druckerhöhungsvorrichtung Turbolader darstellen, die ein entsprechendes Verdichterrad (10, 32) umfassen, welches sich im Einlasskanal (4) befindet und an eine entsprechende Turbine (8, 34), die sich im Abgaskanal (6) befindet, gekoppelt ist.

3. Motor nach Anspruch 1, bei dem die erste Druckerhöhungsvorrichtung einen Turbolader darstellt, der ein Verdichterrad (10) enthält, das sich im Einlasskanal (4) befindet und an eine Turbine (8), die sich im Abgaskanal (6) befindet, gekoppelt ist, und bei dem die zweite Druckerhöhungsvorrichtung einen Kompressor (14) darstellt, der sich im Einlasskanal (4) befindet und durch den Motor elektrisch angetrieben oder mechanisch angetrieben wird.

4. Motor nach einem der Ansprüche 1 bis 3, des Weiteren umfassend einen ersten Sensor, der angeordnet ist, ein Signal zu erzeugen, das die Geschwindigkeit des Motors angibt; einen zweiten Sensor, der angeordnet ist, ein Signal zu erzeugen, das die Belastung, welcher der Motor ausgesetzt ist, angibt; und einen dritten Sensor (26), der angeordnet ist, ein Signal zu erzeugen, das den Druck im Einlasskanal stromabwärts von der zweiten Druckerhöhungsvorrichtung angibt, wobei die Sensoren mit einer Reglereinheit verbunden sind, die ebenfalls mit der ersten und zweiten Druckerhöhungsvorrichtung verbunden ist und angeordnet ist, ihre Abgabe unabhängig zu variieren, und wobei das Drosselventil (15) ebenfalls mit der Reglereinheit verbunden ist, wobei die Reglereinheit programmiert ist, den erwünschten Wert des Drucks im Einlasskanal (4) stromabwärts von der zweiten Druckerhöhungsvorrichtung zu bestimmen und diesen mit dem tatsächlichen Wert des Drucks zu vergleichen und, sofern ein Unterschied besteht, die Abgabe der ersten und/oder zweiten Druckerhöhungsvorrichtung anzupassen, bis es im Wesentlichen keinen Unterschied gibt, wobei die Reglereinheit des Weiteren programmiert ist, wenn im Einlasskanal ein höherer Druck erforderlich ist, vorzugsweise die Abgabe der ersten Druckerhöhungsvorrichtung zu erhöhen, vorbehaltlich dessen, dass der Druck im Abgaskanal (6) einen zuvor festgelegten Wert nicht übersteigt, und, wenn im Einlasskanal (4) ein niedrigerer Druck erforderlich ist, vorzugsweise die Abgabe der zweiten Druckerhöhungsvorrichtung zu verringern.

5. Motor nach Anspruch 4, der Sensoreinrichtungen enthält, die mit der Reglereinheit verbunden sind und angeordnet sind, ein Signal zu erzeugen, das die Rate des Abgasstroms durch den AGR-Kanal (20) und ein AGR-Ventil (22) im AGR-Kanal (20) angibt, wobei die Reglereinheit programmiert ist, ein Signal zu erzeugen, das die erwünschte Rate des Abgasstroms angibt, und die zwei Signale zu vergleichen und, sofern ein Unterschied besteht, die Abgabe der ersten und/oder zweiten Druckerhöhungsvorrichtung und/oder die Position des AGR-Ventils (22) und/oder Drosselventils (15) anzupassen, bis es im Wesentlichen keinen Unterschied gibt.

6. Motor nach einem der vorhergehenden Ansprüche, der eine Abgasreinigungsvorrichtung (18, 23) in dem Weg des Abgasstroms zwischen den Zylindern (2) und dem Einlasskanal (4) enthält.

## Revendications

1. Moteur diesel comprenant un ou plusieurs cylindres (2), un conduit d'admission (4), un conduit d'échappement (6), un premier dispositif d'amplification de pression (8, 10) de type à sortie variable, un second dispositif d'amplification de pression (16, 14 ; 34, 32) de type à sortie variable situé dans le conduit d'admission (4) en aval du premier dispositif d'amplification de pression, un conduit de dérivation qui peut être mis en fonctionnement de manière sélective (11), raccordé au conduit d'admission (4) à des positions en amont et en aval du second dispositif d'amplification de pression, un papillon des gaz sélectivement variable (15) situé dans le conduit d'amission (4) à une position entre le second dispositif d'amplification de pression (16, 14 ; 34, 32) et le raccordement amont du conduit de dérivation (11) avec le conduit d'admission (4), **caractérisé en ce que** le conduit de recirculation des gaz d'échappement (RGE) (20) est raccordé au conduit d'échappement (6) et au conduit d'admission (4) à une position entre le papillon des gaz (15) et le second dispositif d'amplification de pression (16, 14 ; 34, 32).

2. Moteur selon la revendication 1, dans lequel les premier et second dispositifs d'amplification de pression constituent des turbocompresseurs comprenant une roue de compresseur respective (10, 32) située dans le conduit d'admission (4) et couplée à une turbine respective (8, 34) située dans le conduit d'échappement (6).

3. Moteur selon la revendication 1, dans lequel le premier dispositif d'amplification de pression constitue un turbocompresseur comprenant une roue de compresseur respective (10) située dans le conduit d'admission (4) et couplée à une turbine (8) située dans le conduit d'échappement (6) et le second dispositif d'amplification de pression constitue un turbocompresseur (14) qui est situé dans le conduit d'admission (4) et est électriquement entraîné ou mécaniquement entraîné par le moteur.

4. Moteur selon l'une quelconque des revendications 1 à 3, comprenant en outre un premier capteur conçu pour produire un signal indicatif de la vitesse du moteur, un deuxième capteur conçu pour produire un signal indicatif de la charge à laquelle le moteur est soumis, et un troisième capteur (26) conçu pour produire un signal indicatif de la pression dans le conduit d'admission en aval du second dispositif d'amplification de pression, les capteurs étant raccordés à un dispositif de commande qui est également raccordé aux premier et second dispositifs d'amplification de pression et est conçu pour faire varier de manière indépendante leur sortie, le papillon des gaz (15) étant également raccordé au dispositif de commande, le dispositif de commande étant programmé pour déterminer la valeur souhaitée de la pression dans le conduit d'admission (4) en aval du second dispositif d'amplification de pression et pour comparer celle-ci avec la valeur réelle de la pression et, dans le cas où il y a une différence, pour ajuster la sortie du premier et/ou du second dispositif d'amplification de pression jusqu'à ce qu'il n'y ait sensiblement aucune différence, le dispositif de commande étant en outre programmé, si une pression plus élevée est nécessaire dans le conduit d'admission, pour augmenter de manière préférentielle la sortie du premier dispositif d'amplification de pression, soumis à la pression dans le conduit d'échappement (6) qui ne dépasse pas une valeur prédéterminée et, si une pression inférieure est nécessaire dans le conduit d'admission (4), pour diminuer de manière préférentielle la sortie du second dispositif d'amplification de pression.

5. Moteur selon la revendication 4, comprenant des moyens de capteur raccordés au dispositif de commande et conçus pour produire un signal indicatif de la vitesse de circulation des gaz d'échappement à travers le conduit de RGE (20) et une soupape de RGE (22) dans le conduit de RGE (20), le dispositif de commande étant programmé pour produire un signal indicatif de la vitesse de circulation souhaitée des gaz d'échappement et pour comparer les deux signaux et, dans le cas où il y a une différence, pour ajuster la sortie du premier et/ou du second dispositif d'amplification de pression et/ou la position de la soupape de RGE (22) et/ou du papillon des gaz (15) jusqu'à ce qu'il n'y ait sensiblement aucune différence.

6. Moteur selon l'une quelconque des revendications précédentes, comprenant un dispositif de purification des gaz d'échappement (18, 23) dans le trajet de circulation des gaz d'échappement entre les cylindres (2) et le conduit d'admission (4).
